# EUROPEAN PATENT APPLICATION

(11) **EP 4 613 790 A1**
(43) Date of publication of application: **10.09.2025**
(21) Application number: 24161606.9
(22) Date of filing: 05.03.2024
(51) Int. Cl.: C08G 59/40, C08G 59/68, C08G 59/32, C08J 5/04

(54) **HIGH PERFORMANCE SULPHUR-ENRICHED POLYMERS AND COMPOSITES THEREOF**

(71) Applicant: EMPA, 8600 Dübendorf (CH)
(72) Inventor: Pansare, Amol Vasantrao, 8600 Dübendorf (CH); Barbezat, Michel Yves, 8487 Zell (CH); Terrasi, Giovanni Pietro, 8616 Riedikon (CH)
(74) Representative: Schulz Junghans Patentanwälte PartGmbB

(57) **Abstract**

The present invention relates to a method for preparing a molten mixture comprising forming a molten mixture of elemental sulphur and epoxide resin, wherein the epoxide resin comprises at least one epoxide moiety, in the presence of
i. an external catalyst, wherein the external catalyst is a primary amine, a secondary amine or a tertiary amine, or
ii. an intramolecular catalyst, wherein the intramolecular catalyst is a tertiary amine and wherein the intramolecular catalyst is present within the epoxide resin.

The invention further relates to a method for preparing a cured resin, comprising curing a molten mixture, and a cured resin characterised has a glass transition temperature in the range of 120 °C to 190 °C.

The invention further relates to a method for preparing a cured composite material, comprising the steps of
a. providing a molten mixture,
b. laying fibres on top of said molten mixture,
c. curing the mixture of molten mixture in the presence of a fibres, yielding a cured composite material;
and a cured composite material comprising a polymer and fibres.

## Description

### Background

Epoxy based materials are considered versatile due to their varied applications. Some of their applications are in coatings, adhesives and fibre reinforced composite materials. Curing of an epoxy resin is well known and allows to form a stable material [WO 2018/ 144974 A1; US 2019352454 A1]. For curing of epoxides, amine and anhydride based molecules are commonly used as curing agent [US 7041736 B2; Advanced Materials, 2018, 30, 1801523]. Epoxy resins of this kind can be used as matrices for composite material or binders in watercraft construction, in wind turbines, in pipes, for containers or in aircraft structures, as they possess improved flexural impact strength and elongation at rupture [US 2007232725 A1].

The recent discovery of inverse vulcanization has heralded a new class of polymeric and sulphur-including materials [Nature Chemistry, 2013, 5, 518-524], highlighting the importance of sulphur. These polymers are made predominantly from elemental sulphur without use of organic solvents or initiators. Sulphur itself acts as the reaction solvent, monomer and initiator during the molten stage. The growing sulphur polymers are stabilized against depolymerization by reaction with an organic crosslinker, in a process that is simple, scalable, and highly atom efficient. This organic crosslinker contains unsaturated bonds (olefins) and the thiol-ene "click" reaction ensures a high degree of polymerization. The use of inverse vulcanisation of sulphur based olefins is, however, unfeasible in applications where high glass transition material is required. For example, for aerospace composites, the glass transition temperature of the polymer matrix used must be higher than 150°C to be accepted in structural and load-bearing parts. To this day, vulcanization polymers cannot reach such a high glass transition temperature, which is inadequate for structural polymer applications. Thus, it is essential to work towards improvement and development of this glass transition temperature.

Sulphur has been used in a diverse range of applications, including its use as curing agent of polymers and resins (CN 107698741 B, EP 0223073 A2, CN 107216606 B, US 2014110881 A1, CN 1618830 A, CN 102432829 A, CN 102069141 A, CN 107698741 A, CN 103044143 A).

However, these prior art methods use elemental sulphur for polymer curing in the presence of polyolefin containing crosslinkers which are flexible and reduce the mechanical strength or the backbone, and hence, are not suitable for application requiring a high glass transition temperature.

Additionally, elemental sulphur suffers from poor solubility in most organic solvents. This issue may be overcome by using thiols, which are the most commonly used organic substrates based on sulphur for curing olefins and epoxides. Such commercially available thiols, however, result in specifically epoxides with a low crosslink density which in turn results in low glass transition temperatures in the range of 40 to 80 °C, eliminating their use for applications where high glass transition temperatures are required.

The International application WO 2021/252906 A2 discloses a sulphur reaction product formed by reacting elemental sulphur with an aromatic diamine or epoxide compound. However, the reaction of both, a tri- and tetra-epoxide with elemental sulphur was unsuccessful.

Based on the above-mentioned state of the art, the objective of the present invention is to provide means and methods to obtain polymers with a high crosslink density and high glass transition temperature based on elemental sulphur. This objective is attained by the subject-matter of the independent claims of the present specification, with further advantageous embodiments described in the dependent claims, examples, figures and general description of this specification.

### Summary of the Invention

A first aspect of the invention relates to a method for preparing a molten mixture comprising forming a molten mixture comprising elemental sulphur and an epoxide resin, wherein the epoxide resin comprises at least one epoxide moiety, in the presence of
i. an external catalyst, wherein the external catalyst is a primary amine, a secondary amine or a tertiary amine, or
ii. an intramolecular catalyst, wherein the intramolecular catalyst is a tertiary amine and wherein the intramolecular catalyst is present within the epoxide resin.

A second aspect of the invention relates to a method for preparing a cured resin, comprising curing a molten mixture according to the first aspect of the invention at a temperature in the range of 100 to 200 °C.

A third aspect of the invention relates to a cured resin according to the second aspect of the invention, characterised in that the cured resin has a glass transition temperature in the range of 120 °C to 190 °C.

A fourth aspect of the invention relates to a method for preparing a cured composite material, comprising the steps of
a. providing a molten mixture according to the first aspect of the invention,
b. laying fibres on top of said molten mixture,
c. curing the mixture of molten mixture in the presence of fibres, yielding a cured composite material.

A fifth aspect of the invention relates to a cured composite material comprising a cured resin according to the third aspect of the invention and fibres.

A fifth aspect of the invention relates to a method for degrading a cured resin or cured composite material according to the third or fifth aspect of the invention comprising submerging the cured resin or cured composite material into a solution comprising an oxidising agent yielding elemental sulphur and molten mixture in case of the molten mixture or cured resin, or elemental sulphur and molten mixture and fibres in case of the cured composite material.

### Terms and definitions

### General

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

Unless defined otherwise, all technical and scientific terms used herein have the same meaning as commonly understood by one of ordinary skill in the art (e.g. organic synthesis).

The term *external catalyst* in the context of the present specification relates to a basic catalyst, particularly to a basic aromatic catalyst, which increases the reaction rate without undergoing chemical changes itself. The external catalyst functions as an electron donor.

The term *intramolecular catalyst* in the context of the present specification relates to a tertiary amine within the compound which functions as internal base catalyst in a reaction with another compound without undergoing a chemical reaction itself.

The term *fibres* in the context of the present specification relates to synthetic fibres, semisynthetic fibres and/or natural fibres.

The term *synthetic fibres* in the context of the present specification relates to fibres made through chemical synthesis. Examples of synthetic fibres include but are not limited to nylon fibres, polyester fibres, acrylic fibres, olefin fibre, modacrylic fibre, aromatic polyamide fibre, carbon fibre, glass fibre, and metallic fibre.

The term *semisynthetic fibres* in the context of the present specification relates to fibres initially derived from naturally recovering fibres, generally with the expansion of treatment by manufactures synthetic substances. Examples of semisynthetic fibres include but are not limited to viscose, cellulose diacetate, and cellulose triacetate.

The term *natural fibres* in the context of the present specification relates to fibres that are produced by geological processes, or from plants or animals. Examples of natural fibres include but are not limited to seed fibre, bast fibre, silk fibre and wool.

The term *composite material* in the context of the present specification relates to a material which is produced from two or more constituent materials which have dissimilar chemical or physical properties, forming a material with its own individual chemical and physical properties, different from those of the individual materials used for the making of the composite material.

The term *primary*/*secondary*/*tertiary amine* in the context of the present specification relates to an amine moiety of the formula R-NH₂ (primary), R-NH-R (secondary) or NR₃ (tertiary), wherein R is not -C(=O)R₂. Non-limiting examples for R include, independently from one another, a linear or cyclic alkyl, an aryl, excluding -C(=O)R₂.

Any patent document cited herein shall be deemed incorporated by reference herein in its entirety.

The formulae of the present specification follow the convention of organic chemistry to not show hydrogen atoms on carbon scaffolds. Carbon is tetravalent and bonds not shown are assumed to be hydrogen unless shown otherwise.

A *C₁*-*C₆ alkyl* in the context of the present specification relates to a saturated linear or branched hydrocarbon having 1, 2, 3, 4, 5 or 6 carbon atoms. Non-limiting examples for a C₁-C₆ alkyl include methyl, ethyl, propyl, n-butyl, 2-methylpropyl, *tert*-butyl, cyclo-butyl, cyclo-propyl, methyl-cyclo-propyl, n-pentyl, 2-methylbutyl, 3-methylbutyl, 1,1-dimethylpropyl, 1,2-dimethylpropyl, 1,2-dimethylpropyl, cyclo-pentyl, cyclo-hexyl, methyl-cyclo-pentyl. In certain embodiments, a C₅ alkyl is a pentyl or cyclopentyl moiety and a C₆ alkyl is a hexyl or cyclohexyl moiety.

### Detailed Description of the Invention

A first aspect of the invention relates to a method for preparing a molten mixture comprising forming a molten mixture comprising elemental sulphur and an epoxide resin, wherein the epoxide resin comprises at least one epoxide moiety, in the presence of
i. an external catalyst, wherein the external catalyst is a primary amine, a secondary amine or a tertiary amine, or
ii. an intramolecular catalyst, wherein the intramolecular catalyst is a tertiary amine and wherein the intramolecular catalyst is present within the epoxide resin.

In certain embodiments, the epoxide resin comprises at least two epoxide moieties.

In certain embodiments, the epoxide resin comprises at least three epoxide moieties.

In certain embodiments, the epoxide resin comprises two to four epoxide moieties.

In certain embodiments, the epoxide resin comprises three or four epoxide moieties.

In certain embodiments, the external catalyst functions as an electron donor.

The external catalyst used is a basic catalyst, which is able to donate an electron to the elemental sulphur which subsequently forms a radical anion.

In certain embodiments, the external catalyst is an alkylated imidazole.

In certain embodiments, the external catalyst is selected from 2,4-ethylmethylimidazole, 1-methylimidazole, 2-methylimidazole, 2-ethyl-4-methyl-1H-imidazole-1-propanenitrile, 4-methylimidazole, 5-methylimidazole, 1-benzyl-2-methylimidazole, 1,2-dimethylimidazole, 1-vinylimidazole and 2-ethyl-1-methylimidazole.

In certain embodiments, the external catalyst is 2,4-ethylmethylimidazole.

In certain embodiments, the method comprises the steps of
a. forming a molten mixture of elemental sulphur and an epoxide resin, wherein the epoxide resin comprises at least one epoxide moiety,
   resin,
b. in the presence of an intramolecular catalyst, wherein the intramolecular catalyst is a tertiary amine and wherein the intramolecular catalyst is present within the epoxide resin.

In certain embodiments, the method comprises the steps of
a. forming a molten mixture of elemental sulphur and an epoxide resin, wherein the epoxide resin comprises at least two epoxide moieties,
b. in the presence of an intramolecular catalyst, wherein the intramolecular catalyst is a tertiary amine and wherein the intramolecular catalyst is present within the epoxide resin.

In certain embodiments, the elemental sulphur is selected from cyclopentasulphur, cyclohexasulphur, cycloheptasulphur cyclooctasulphur, cyclononasulphur, cyclododecasulphur, and cyclooctadecasulphur.

In certain embodiments, the elemental sulphur is cyclooctasulphur.

In certain embodiments, the epoxide resin is a compound of one of the formulae (I), or (II), or (III), or (IV), or (V) 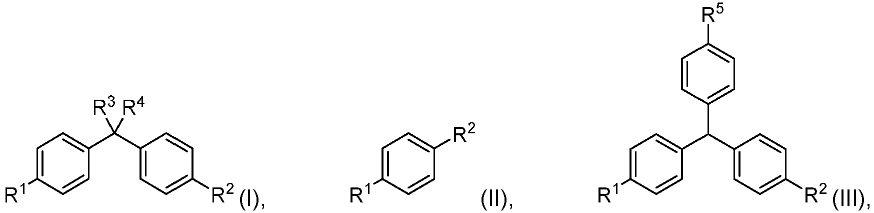 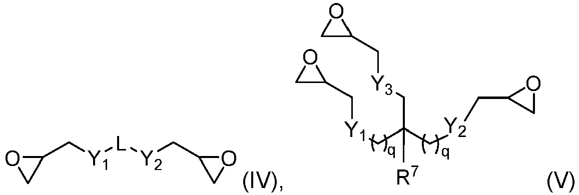 wherein
R¹, R², and R⁵ are -OR⁸ and/or-NR⁸₂, wherein R⁸ is 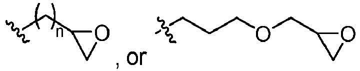
and wherein n is an integer in the range of 1 to 6,
R³ and R⁴ are H and/or -CH₃,
L is a substituted or unsubstituted C₁-C₆-alkyl, or 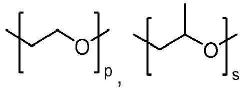 wherein p is an integer in the range of 1 to 10, s is an integer in the range of 1 to 400;
Y₁, Y₂ and Y₃ are selected from O and CH₂,
R⁷ is selected from H and the group consisting of C₁-C₃-alkyl;
or the epoxide resin is selected from
tris(2,3-epoxypropyl) isocyanurate, poly(bisphenol A-co-epichlorohydrin) glycidyl end-capped, 3,4-epoxycyclohexylmethyl 3,4-epoxycyclohexanecarboxylate, poly[(phenyl glycidyl ether)-co-formaldehyde], poly(dimethylsiloxane) diglycidyl ether terminated, (3-glycidyloxypropyl)trimethoxysilane, 1,3-Butadiene diepoxide, (2-ethyl-2-(hydroxymethyl)-1,3-propanediol polymer with (chloromethyl)oxirane.

In certain embodiments, p is an integer in the range of 5 to 10.

In certain embodiments, s is an integer in the range of 300 to 400.

In certain embodiments, the epoxide resin is a compound of one of the formulae (I), or (II), or (III), or (IV), or (V), wherein
R³ and R⁴ are H and/or -CH₃,
R¹, R², and R⁵ are -OR⁸ and/or-NR⁸₂, wherein R⁸ is 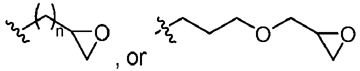
and wherein n is an integer in the range of 1 to 6,
L is a substituted or unsubstituted C₁-C₆-alkyl, Y₁, Y₂ and Y₃ are selected from O and CH₂,
R⁷ is selected from H and the group consisting of C₁-C₃-alkyl;
or the epoxide resin is selected from
poly(bisphenol A-co-epichlorohydrin) glycidyl end-capped, 3,4-epoxycyclohexylmethyl 3,4-epoxycyclohexanecarboxylate, poly[(phenyl glycidyl ether)-co-formaldehyde], poly(dimethylsiloxane) diglycidyl ether terminated,

In certain embodiments, the epoxide resin is a compound of one of the formulae (I), or (II), wherein
R³ and R⁴ are H and/or -CH₃,
R¹ and R² are -OR⁸ and/or -NR⁸₂, wherein R⁸ is 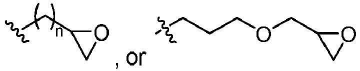 and
wherein n is an integer in the range of 1 to 6,
or the epoxide resin is poly(bisphenol A-co-epichlorohydrin) glycidyl end-capped.

In certain embodiments, n is an integer in the range of 1 to 3.

In certain embodiments, the epoxide resin is selected from bisphenol A diglycidyl ether, N,N-diglycidyl-4-glycidyloxyaniline, 4,4'-methylenebis(N,N-diglycidylaniline), and bisphenol A propoxylate diglycidyl ether.

In certain embodiments, the epoxide resin is selected from N,N-diglycidyl-4-glycidyloxyaniline and 4,4'-methylenebis(N,N-diglycidylaniline).

These tri- and tetra-epoxide resins contain one and two tertiary nitrogen atoms (intramolecular catalyst), respectively, which acts as a base catalyst required for the elemental sulphur-epoxide reaction, making the addition of an additional or external catalyst redundant.

Additionally, tri- and tetra-epoxide resins form a stable homogenous mixture with sulphur allowing for.

In certain embodiments, the molar ratio of epoxide resin and elemental sulphur is 1:2 to 1:4.

The molar ratio is based on the number of epoxide moieties present in the epoxide resin. The more epoxide moieties present, the higher the epoxide resin /sulphur ratio. This allows for a high crosslinking density as all epoxide moieties are linked to sulphur which in turn results in a high glass transition temperature above 120 °C of cured resin.

A 1:1 ratio would not allow for such high crosslinking density in case of two or more epoxide moieties and the resulting product would have only a low glass transition temperature.

In certain embodiments, the molar ratio of epoxide resin and elemental sulphur is 1:2 to 1:3.

In certain embodiments, the molar ratio of epoxide resin and elemental sulphur is 1:2.

In certain embodiments, the molar ratio of epoxide resin and elemental sulphur is 1:3 to 1:4.

A 1:3 or 1:4 ratio for tri- or tetra-epoxide resins, respectively allows for high crosslinking density and use in high-glass transition temperature applications. The resulting polymer has improved mechanical properties such as tensile strength and compressive strength.

In certain embodiments, the elemental sulphur and epoxide resin are heated at a temperature in the range of 100 to 200 °C, yielding a molten mixture.

Heating a mixture of molten epoxide resin and solid elemental sulphur forms a homogenous molten mixture.

In certain embodiments, the molten mixture is cured at a temperature in the range of 100 to 200 °C, yielding a cured resin.

The homogenous molten mixture is further heated at said temperature allowing the ring structure of the elemental sulphur to open and react with the epoxide forming a crosslinking structure and solidify to yield a cured resin.

In certain embodiments, the cured resin has a glass transition temperature in the range of 120 °C to 190 °C.

In certain embodiments, the cured resin has a glass transition temperature in the range of 160 °C to 180 °C.

In certain embodiments, the cured resin has a glass transition temperature in the range of 120 °C to 130 °C, in case of the epoxide resin comprising two epoxide moieties.

In certain embodiments, the cured resin has a glass transition temperature in the range of 130 °C to 160 °C, in case of the epoxide resin comprising three epoxide moieties.

In certain embodiments, the cured resin has a glass transition temperature in the range of 160 °C to 190 °C, in case of the epoxide resin comprising four epoxide moieties.

In certain embodiments, the cured resin has a glass transition temperature in the range of 160 °C to 180 °C, in case of the epoxide resin comprising four epoxide moieties.

A second aspect of the invention relates to a method for preparing a cured resin, comprising curing the molten mixture according to the first aspect of the invention at a temperature in the range of 100 to 200 °C.

The molten mixture is prepared according to embodiments stated in the first aspect of the invention.

A third aspect of the invention relates to a cured resin according to the second aspect of the invention, characterised in that the cured resin has a glass transition temperature in the range of 120 °C to 190 °C.

In certain embodiments, the cured resin according to the second aspect of the invention, characterised in that the cured resin has a glass transition temperature in the range of 120 °C to 130 °C.

In certain embodiments, the cured resin according to the second aspect of the invention, characterised in that the cured resin has a glass transition temperature in the range of 130 °C to 160 °C.

In certain embodiments, the cured resin according to the second aspect of the invention, characterised in that the cured resin has a glass transition temperature in the range of 160 °C to 190 °C.

In certain embodiments, the cured resin according to the second aspect of the invention, characterised in that the cured resin has a glass transition temperature in the range of 160 °C to 180 °C.

The third aspect of the invention involves all of the embodiments stated in the first and second aspect of the embodiments, as stated therein.

A fourth aspect of the invention relates to a method for preparing a cured composite material, comprising the steps of
a. providing a molten mixture according to the first aspect of the invention,
b. laying fibres on top of said molten mixture,
c. curing the molten mixture in the presence of fibres, yielding a cured composite material.

The fourth aspect of the invention involves all of the embodiments stated in the first aspect of the invention.

In certain embodiments, the molten mixture in the presence of fibres is cured at 100 to 200 °C.

In certain embodiments, the fibres are selected from synthetic fibres, semisynthetic fibres and natural fibres.

In certain embodiments, the fibres are synthetic fibres.

In certain embodiments, the fibres are selected from hybrid fibres, glass fibres and carbon fibres.

A fifth aspect of the invention relates to a cured composite material comprising a cured resin according to the third aspect of the invention, and fibres.

The fifth aspect of the invention involves all of the embodiments stated in the first and second aspect of the invention.

The cured composite material comprising a cured resin according to the third aspect of the invention is characterised in having a high crosslink density and accordingly a high glass transition temperature in the range of 120 °C to 190 °C, in particular a glass transition temperature in the range of 160 °C to 180 °C.

In certain embodiments, the fibres are selected from synthetic fibres, semisynthetic fibres and natural fibres.

In certain embodiments, the fibres are synthetic fibres.

In certain embodiments, the fibres are selected from hybrid fibres, glass fibres and carbon fibres.

A sixth aspect of the invention relates to a method for degrading a cured resin or cured composite material according to the or second, or third, or fourth or fifth aspect of the invention comprising submerging the cured resin or cured composite material into a solution comprising an oxidising agent yielding elemental sulphur and molten mixture in case of the molten mixture or cured resin, or elemental sulphur and molten mixture and fibres in case of the cured composite material.

The sixth aspect of the invention involves all of the embodiments of the first and second aspect, the third aspect of the invention and the fourth and fifth aspect of the invention.

The addition of an oxidising agent to a resin comprising disulphide bonds or thiol bonds oxidises the sulphur containing bonds and results in a disruption of the crosslinking bonds of the resin.

In certain embodiments, the method is conducted at a temperature of at least 15 °C.

Conducting the reaction at a temperature of at least 15 °C accelerates the degradation reaction.

In certain embodiments, the oxidising agent is selected from the groups of organic peroxides, inorganic peroxides, peroxide containing enzymes, peroxide containing plant extracts, and peroxide containing vegetable extracts.

In certain embodiments, the organic peroxide is selected from the group consisting of benzoyl peroxide, tert-butyl hydroperoxide, cumyl hydroperoxide, di-tert-butyl peroxide, diacetyl peroxide, dicumyl peroxide, diethyl peroxide, dipropyl peroxide, methyl ethyl ketone peroxide, peroxyacetic acid, peroxybenzoic acid, tert-butyl perbenzoate.

In certain embodiments, the inorganic peroxide is selected from the group consisting of hydrogen peroxide, sodium peroxide, potassium peroxide, barium peroxide, calcium peroxide, strontium peroxide, magnesium peroxide.

In certain embodiments, the peroxide containing enzyme is selected from thioredoxin reductase, glutathione peroxidase, the group consisting of peroxiredoxins, the group consisting of thioredoxins, the group consisting of glutaredoxins, the group consisting of protein disulphide isomerases, quiescin sulfhydryl oxidase, cysteine dioxygenase, cysteine sulfonate decarboxylase, methionine sulfoxide reductase.

In certain embodiments, the peroxide containing plant extract is selected from allium sativum, curcuma longa, camelia sinensis, silybum marianum, panax ginseng, Rosmarinus officinalis, armoracia rusticana, raphanus sativus, aloe vera, zingiber officinale, mustard.

In certain embodiments, the peroxide containing vegetable extract is selected from allium sativum, allium cepa, cruciferous vegetable, spinacia oleracea, asparagus officinalis, Cynara cardunculus var. scolymus, beta vulgaris, raphanus sativus, curcuma longa .

In certain embodiments, the oxidising agent is selected from the group of inorganic peroxides.

In certain embodiments, the fibres are selected from synthetic fibres, semisynthetic fibres and natural fibres.

In certain embodiments, the fibres are synthetic fibres.

In certain embodiments, the fibres are selected from hybrid fibres, glass fibres and carbon fibres.

The invention is further illustrated by the following examples and figures, from which further embodiments and advantages can be drawn. These examples are meant to illustrate the invention but not to limit its scope.

### Description of the Figures

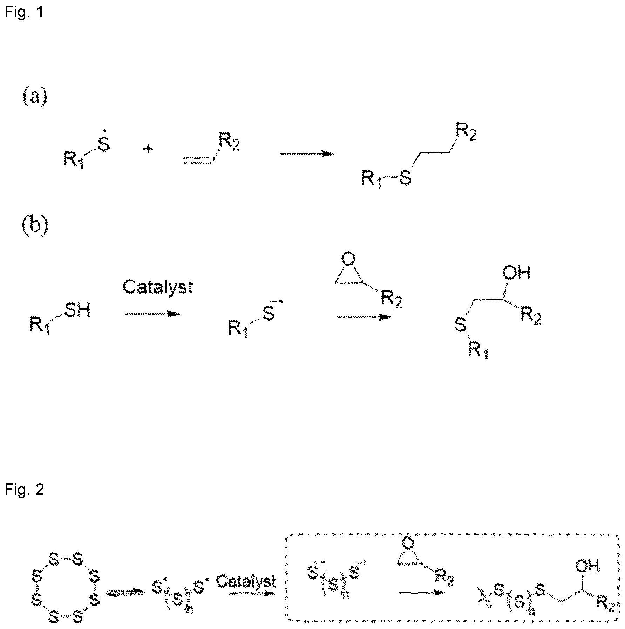

- Fig. 1: shows a a) thiol-ene and b) thiol-epoxide click reaction as known from the prior art.
- Fig. 2: shows the reaction scheme of elemental cyclooctasulphur and epoxide.
- Fig. 3: shows (A) conventional di- epoxy resin with elemental cyclooctasulphur: no curing, (B) di- epoxy resin and elemental sulphur in presence of amine base 2,4-Ethylmethylimidazole as external catalyst.
- Fig. 4: shows commercial aerospace tri- functional epoxy resin, with three functional groups, which will give a high crosslink density. Elemental sulphur-epoxide click reactions will give access to new polymeric materials and composites.

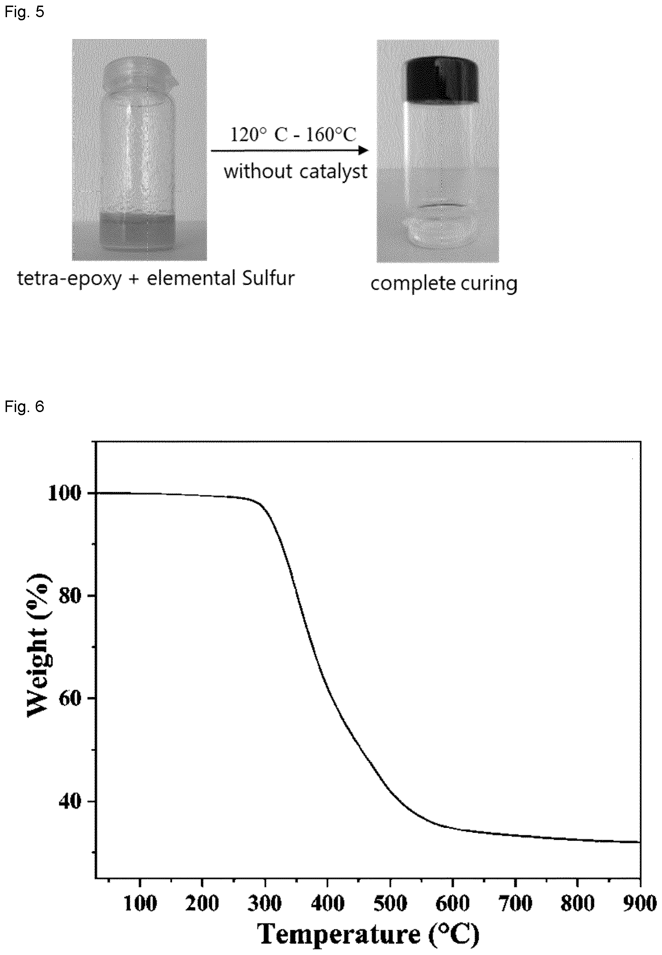

- Fig. 5: shows commercial aerospace epoxy tetra- functional epoxy resin, with four functional groups, generating high crosslink density polymer.
- Fig. 6: shows a thermogram of a thermal gravimetric analysis (TGA) of sulphur cured tetrafunctional epoxy polymer, shows the excellent thermal properties of the resulting sulphur cured tetra-functional epoxy polymer (onset of thermal degradation *T_{d}* >300°C).

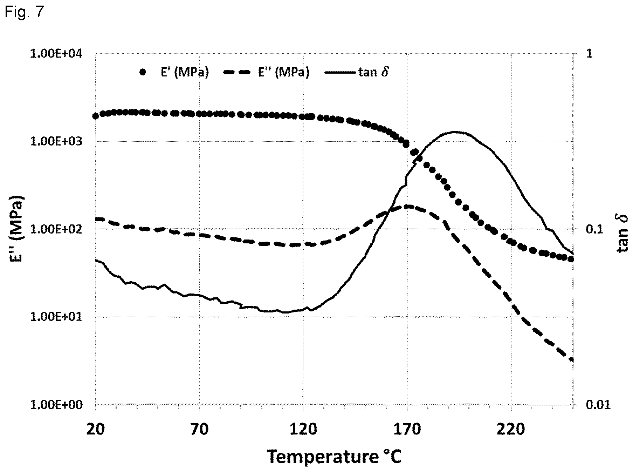

- Fig. 7: shows a thermogram (DMTA) of sulpur cured tetra-epoxide polymer, DMTA curves showing the storage modulus of sulphur cured tetra-functional epoxide (~ 5GPa @ RT) with *T_{g}* of 165°C (onset storage modulus) to 195°C (tan δ maximum).

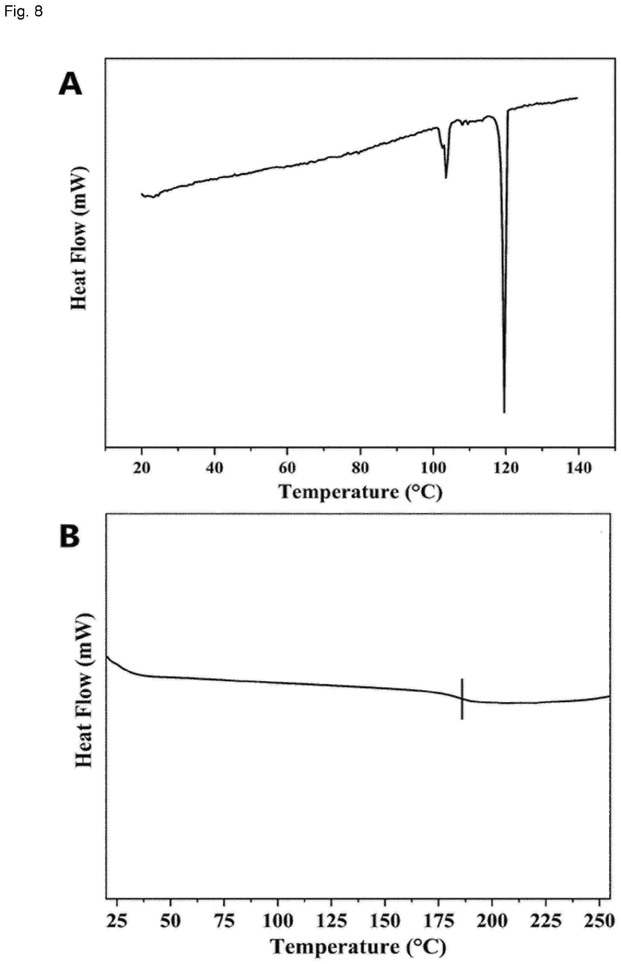

- Fig. 8: shows A) a differential scanning calorimetry (DSC) thermogram of elemental cyclooctasulphur powder; B) a DSC of a sulphur cured tetrafunctional epoxy polymer, shows the excellent thermal properties of the resulting sulphur cured tetra-functional epoxy polymer (Glass transition temperature at = *T_{g}* = 185°C).

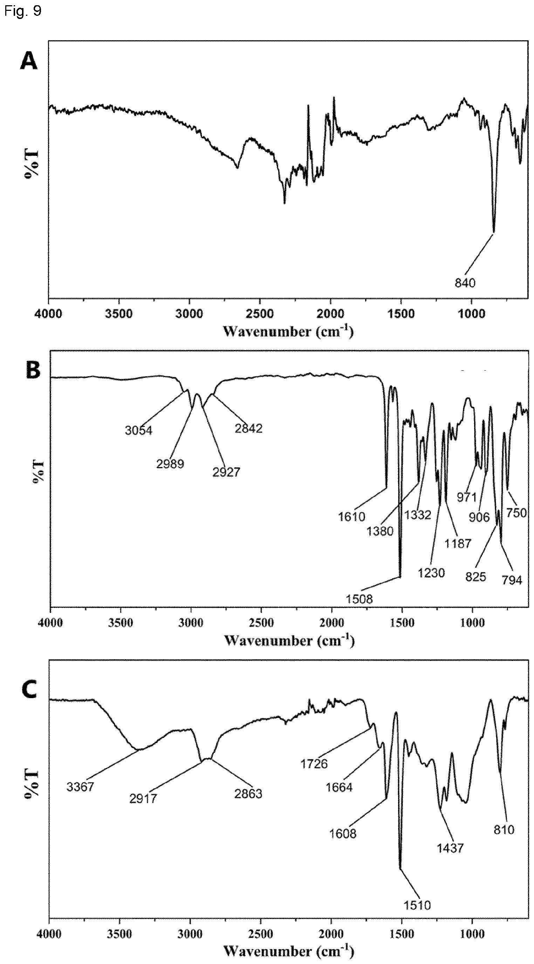

- Fig. 9: shows an FTIR spectra of A) elemental cyclooctasulphur powder, B) tetra-functional epoxy resin, C) sulphur cured tetra-functional epoxy polymer.

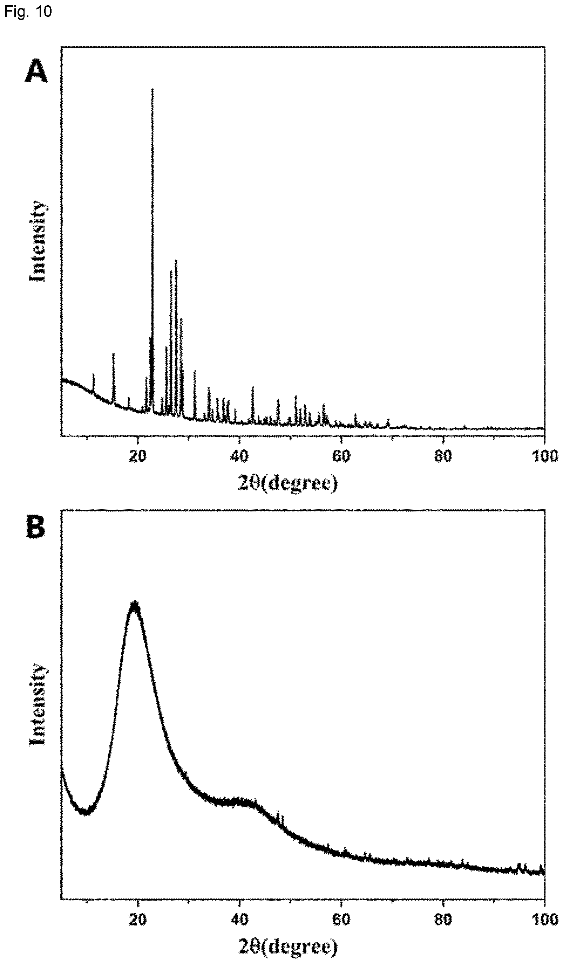

- Fig. 10: shows an X-ray diffraction spectra of A) elemental cyclooctasulphur powder, B) sulphur cured tetrafunctional epoxy polymer.

### Examples

### Example 1: Preparation of epoxy polymers:

### Sulphur cured di-functional epoxide resin

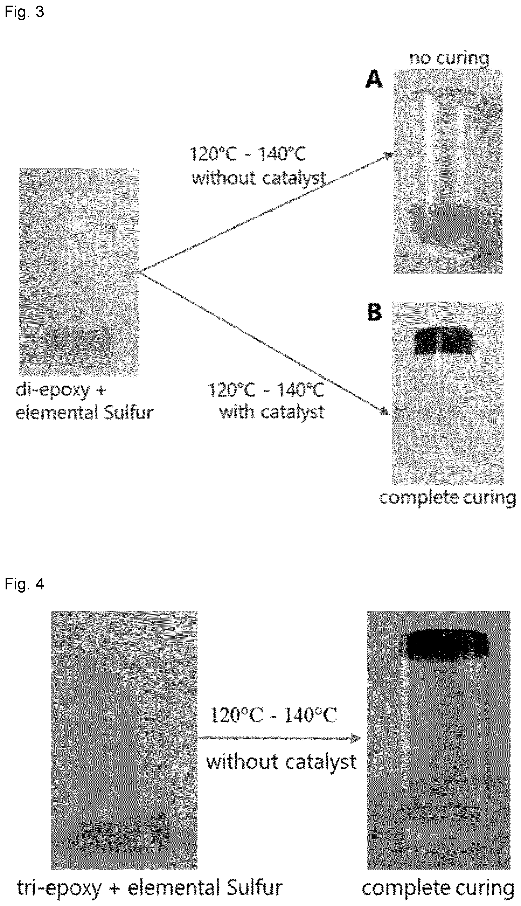

4.0 g of Bis[4-(glycidyl oxy)phenyl]methane and 0.380g of elemental cyclooctasufur were thoroughly mixed in a container with addition of 0.02 g of 2-ethyl-4-methylimidazole (0.5% by weight of epoxy resin) as a catalyst. This mixture was placed in an oven for six hours for curing at 120°C to 140°C temperature. In presence of catalyst curing was **observed.(****Fig. 3****)**

The reaction was performed with different stoichiometric molar ratio and % weight ratio of Bis [4-(glycidyl oxy) phenyl] methane and elemental cyclooctasulphur, wherein similar results were obtained.

### Sulphur cured tri-functional epoxide resin

3.0 g of N,N-Diglycidyl-4-glycidyloxyaniline and 0.288g of elemental cyclooctasulphur were thoroughly mixed in a container. This mixture was placed in an oven for six hours for curing at 120 to 160°C temperature. Curing was observed as displayed in **Fig. 4****.** This is due to the advantage of using specialized tri-epoxy resins, as it contain tertiary nitrogen atom in the structure, which works like base catalysts, as required for the elemental sulphur- epoxide curing reaction. Thus, this functional epoxy resins need no external catalysts for curing.

The reaction was performed with different stoichiometric molar ratio and % weight ratio of N,N-Diglycidyl-4-glycidyloxyaniline and elemental cyclooctasulphur, wherein similar results were obtained.

### Sulphur cured tetra-functional epoxide resin

4.0 g of 4,4'-Methylenebis (N,N-diglycidylaniline) and 0.288g of elemental cyclooctasufur were thoroughly mixed in a container. This mixture was placed in an oven for six hours for curing at 120 to 160 °C temperature.

The optimal stoichiometry molar ratio of epoxide and sulphur (1:1, 1:2, 1:3, and 1:4 were investigated, using 0.1 to 50% weight ratio) was investigated and observed curing in absence of external catalyst. The resulting thermomechanical behaviour for maximum *T_{g}* of the newly developed polymers were investigated using TGA, DSC, and DMTA. The high crosslink density reflected in the *T_{g}* of the polymer networks. Epoxy resins without tertiary nitrogen atoms, i.e. the conventional di-functinal epoxy resins were unable to undergo curing, but in presence of amine based 2,4-Ethylmethylimidazole as an external catalyst, complete curing of the epoxy was observed, suggesting the importance of the nitrogen atom for curing reaction.

As nitrogen is already present in tri and tetra-epoxy, an external catalyst is not required. The experiments showed that sulphur forms a stable homogenous mixture with multifunctional epoxy resin for longer time. This homogenous mixture was found to be stable for 12 months without any onset of curing when kept at room temperature.

### Curing reactions

Curing reactions of the polymers were performed at different conditions like open atmosphere, using hot plate and vacuum oven at different temperature ramp (100°C to 200°C) with respect to time (2 hours to seven days), using containers made up of aluminium, tin, Teflon and its mould.

### Preparation of cured composite material

Before complete curing of the resin, the resin existed in molten state and this molten mixture was poured in a rectangular shaped PTFE mould. (The thickness of the parts was kept at 2 mm, as per the industry standard).

Hybrid, carbon and glass fibre reinforced composites were prepared and the fibre fabrics were manually cut in rectangular pieces. Half of the resin-curing agent mixture was first poured in the mould and then the fibres were laid on top. Subsequently, the remaining half of the mixture was poured on top and the parts were kept in an oven for curing with the same curing schedule as above.

The reaction was performed with different stoichiometric molar ratios and % weight ratios of tri-functional epoxy resin 4,4'-Methylenebis (N,N-diglycidylaniline and elemental cyclooctasulphur, leading to similar results.

### Measurements

Fourier Transform Infrared Analysis: FT-IR spectras were recorded on a BRUKER FT-IR spectrometer (TENSOR 27) in ATR mode in the range of 4000-400 cm⁻¹.

FT-IR spectra comparisons of the starting materials (elemental cyclooctasulphur powder curing agent and tetra-functional epoxy resin liquid) and the sulphur cured tetra-functional epoxy polymer polymers. As observed from FT-IR spectra, the cured polymers do not contain unreacted elemental cyclooctasulphur powder and epoxide functional group, indicating complete curing.

X-Ray Diffraction: XRD study was carried out on a PANalytical XRD instrument (X'Pert PRO) with CuKα radiation (λ = 0.154060 nm) with a scanning range between 5° and 100°.

The XRD pattern of elemental cyclooctasulphur matches with the sulphur reference of ICSD# 98-003-8147, as the obtained elemental sulphur is an industrial by-product, some degree of misfit of peaks are expected. XRD diffraction pattern shows that, elemental cyclooctasulphur powder was completely consumed during curing.

Differential scanning calorimetry (DSC) and thermogravimetric analysis (TGA) were carried out on a DSC NETZSCH DSC 204F1 Phoenix and TGA NETZSCH TG 209F1 with a heating rate of 20°C min⁻¹ under nitrogen flow (20 mL min⁻¹). Dynamic mechanical thermal analysis (DMTA) were carried out on a GABO, QUALIMETER Testanlagen GmbH. DMTA curves showing the storage modulus of sulphur cured tetra-functional epoxy (~ 5GPa @ RT) with Tg of 165°C (onset storage modulus) to 195°C (tan δ maximum). Thermogram shows the excellent thermal properties of the resulting sulphur cured tetra-functional epoxy polymer (Glass transition temperature at = *T_{g}* = 185°C and onset of thermal degradation *T_{d}* >300°C).

### Example 2: Method of degradation

The cured resin or cured composite material was submerged in 40 ml of 30% hydrogen peroxide solution at a controlled temperature in the range of at least 15 °C.

The start of the degradation was noticed within 2 h of immersion and completed within 6 to 10 days. The success of the degradation was indicated through yellow colouration, thus indicating the formation of elemental sulphur.

### Cited references:

1. WO 2018/144974 A1, Huntsman Petrochemical LLC
2. US 2019/352454 A1, Huntsman Petrochemical LLC
3. US 7041736 B2, 2003, Intel Corp
4. US 2007/232725 A1, Solvay Infra Bad Hönningen GM
5. CN 107698741 B, 2020
6. EP 0223073 A2, 1983, Ashland Oil Inc.
7. CN 107216606 B, 2019
8. US 2014/110881 A1, PRC Desoto Int. Inc.
9. CN 1618830 A, 2005, Beijing University of Chemical Engineering
10. CN 102432829 A, 2012, University South China Tech
11. CN 102069141 A, 2011, Jinan Shengquan Group Share Holding Co. Ltd.
12. CN 107698741 A, 2018, Cas Guangzhou Chemistry Co. Ltd, University of Chinese Academy of Sciences
13. CN 103044143 A, 2013, Shandong Kingenta Eco Eng. Co.
14. Pansare et al., Advanced Materials, 2018, 30, 1801523
15. Chung et al., Nature Chemistry, 2013, 5, 518-524

All scientific publications and patent documents cited in the present specification are incorporated by reference herein.

## Claims

1. A method for preparing a molten mixture comprising forming a molten mixture comprising elemental sulphur and an epoxide resin, wherein the epoxide resin comprises at least one epoxide moiety, in the presence of
i. an external catalyst, wherein the external catalyst is a primary amine, a secondary amine or a tertiary amine, or
ii. an intramolecular catalyst, wherein the intramolecular catalyst is a tertiary amine and wherein the intramolecular catalyst is present within the epoxide resin.

2. The method according to claim 1, wherein the epoxide resin comprises at least two epoxide moieties, particularly the epoxide resin comprises at least three epoxide moieties.

3. The method according to claim 1, wherein the epoxide resin comprises two to four epoxide moieties, particularly the epoxide resin comprises three or four epoxide moieties.

4. The method according to any of the preceding claims, wherein the external catalyst is an electron donor.

5. The method according to any of the preceding claims, wherein the external catalyst is an alkylated imidazole, particularly the external catalyst is selected from 2,4-ethylmethylimidazole, 1-methylimidazole, 2-methylimidazole, 2-ethyl-4-methyl-1H-imidazole-1-propanenitrile, 4-methylimidazole, 5-methylimidazole, 1-benzyl-2-methylimidazole, 1,2-dimethylimidazole, 1-vinylimidazole and 2-ethyl-1-methylimidazole, more particularly the external catalyst is 2,4-ethylmethylimidazole.

6. The method according to any of the preceding claims, wherein the elemental sulphur is selected from cyclopentasulphur, cyclohexasulphur, cycloheptasulphur cyclooctasulphur, cyclononasulphur, cyclododecasulphur, and cyclooctadecasulphur, particularly wherein the elemental sulphur is cyclooctasulphur.

7. The method according to any of the preceding claims, wherein the epoxide resin is a compound of one of the formulae (I), or (II), or (III), or (IV), or (V) 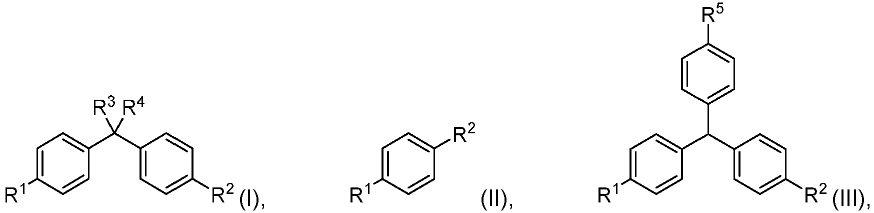 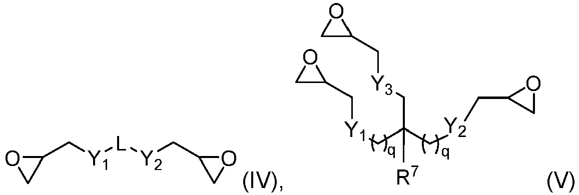 wherein
R¹, R², and R⁵ are -OR⁸ and/or -NR⁸₂, wherein R⁸ is 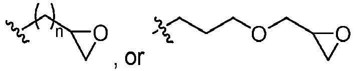 and wherein n is an integer in the range of 1 to 6, particularly n is an integer in the range of 1 to 3,
R³ and R⁴ are H and/or -CH₃,
L is a substituted or unsubstituted C₁-C₆-alkyl, or 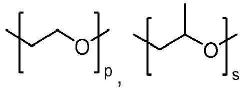 wherein p is an integer in the range of 1 to 10, particularly p is an integer in the range of 5 to 10, s is an integer in the range of 1 to 400, particularly s is an integer in the range of 300 to 400;
Y₁, Y₂ and Y₃ are selected from O and CH₂,
R⁷ is selected from H and the group consisting of C₁-C₃-alkyl;
or the epoxide resin is selected from
tris(2,3-epoxypropyl) isocyanurate, poly(bisphenol A-co-epichlorohydrin) glycidyl end-capped, 3,4-epoxycyclohexylmethyl 3,4-epoxycyclohexanecarboxylate, poly[(phenyl glycidyl ether)-co-formaldehyde], poly(dimethylsiloxane) diglycidyl ether terminated, (3-glycidyloxypropyl)trimethoxysilane, 1,3-Butadiene diepoxide, (2-ethyl-2-(hydroxymethyl)-1,3-propanediol polymer with (chloromethyl)oxirane,
particularly the epoxide resin is a compound of one of the formulae (I), or (II), or (III), or (IV), or (V), wherein
R³ and R⁴ are H and/or -CH₃,
R¹, R², and R⁵ are -OR⁸ and/or -NR⁸₂, wherein R⁸ is 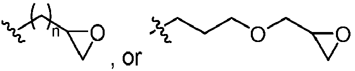 and wherein n is an integer in the range of 1 to 6,
L is a substituted or unsubstituted C₁-C₆-alkyl, Y₁, Y₂ and Y₃ are selected from O and CH₂,
R⁷ is selected from H and the group consisting of C₁-C₃-alkyl;
or the epoxide resin is selected from
poly(bisphenol A-co-epichlorohydrin) glycidyl end-capped, 3,4-epoxycyclohexylmethyl 3,4-epoxycyclohexanecarboxylate, poly[(phenyl glycidyl ether)-co-formaldehyde], poly(dimethylsiloxane) diglycidyl ether terminated,
more particularly the epoxide resin is a compound of one of the formulae (I), or (II), wherein
R³ and R⁴ are H and/or -CH₃,
R¹ and R² are -OR⁸ and/or -NR⁸₂, wherein R⁸ is 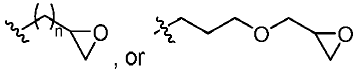 and
wherein n is an integer in the range of 1 to 6, particularly n is an integer in the range of 1 to 3,or the epoxide resin is poly(bisphenol A-co-epichlorohydrin) glycidyl end-capped.

8. The method according to any of the preceding claims, wherein the epoxide resin is selected from bisphenol A diglycidyl ether, N,N-diglycidyl-4-glycidyloxyaniline, 4,4'-methylenebis(N,N-diglycidylaniline), and bisphenol A propoxylate diglycidyl ether.

9. The method according to any of the preceding claims, wherein the molar ratio of epoxide resin and elemental sulphur is 1:2 to 1:4.

10. The method according to any of the preceding claims, wherein the elemental sulphur and epoxide resin are heated at a temperature in the range of 100 to 200 °C, yielding a molten mixture.

11. A method for preparing a cured resin, comprising curing a molten mixture according to claims 1 to 10 at a temperature in the range of 100 to 200 °C.

12. A cured resin obtained by the method according to claim 11, wherein the cured resin is **characterised in that** it has a glass transition temperature in the range of 120 °C to 190 °C, in particular wherein the cured resin is **characterised in that** it has a glass transition temperature in the range of 160 °C to 180 °C.

13. A method for preparing a cured composite material, comprising the steps of
a. providing a molten mixture according to claims 1 to 10,
b. laying fibres on top of said molten mixture,
c. curing the molten mixture in the presence of fibres, yielding a cured composite material.

14. The method according to claim 13, wherein the fibres are selected from synthetic fibres, semisynthetic fibres and natural fibres, particularly wherein the fibres are synthetic fibres, more particularly wherein the fibres are selected from hybrid fibres, glass fibres and carbon fibres.

15. A cured composite material comprising a cured resin according to claim 12, and fibres, particularly fibres selected from synthetic fibres, semisynthetic fibres and natural fibres, more particularly synthetic fibres.
